# EUROPÄISCHE PATENTSCHRIFT

(11) **EP 0 504 582 B1**
(45) Veröffentlichungstag und Bekanntmachung des Hinweises auf die Patenterteilung: **10.09.1997**
(21) Anmeldenummer: 92102174.7
(22) Anmeldetag: 10.02.1992
(51) Int. Cl.: G05D 23/02, G05D 23/12

(54) **Thermostatkopf für das Steuerventil eines Heizkörpers**
Thermostatic head for the control valve of a radiator
Tête thermostatique pour la vanne de commande d'un radiateur

(30) Priorität: 19.03.1991 IT MI910728
(43) Veröffentlichungstag der Anmeldung: 23.09.1992
(73) Patentinhaber: GIACOMINI S.p.A., 28017 S. Maurizio d'Opaglio (NO) (IT)
(72) Erfinder: Giacomini, Mario, Boleto(Madonna del Sasso) (IT)
(74) Vertreter: Mayer, Hans Benno, Dipl.-Ing.

(56) Entgegenhaltungen:
- DE-A- 3 336 016
- DE-A- 3 521 965
- FR-A- 2 301 783
- FR-A- 2 339 798

## Beschreibung

Die vorstehende Erfindung betrifft einen Thermostatkopf fuer das Steuerventil eines Heizkoerpers einer Heizungsanlage, entsprechend dem Oberbegriff des Anspruchs 1.

Es sind bereits Thermostatkoepfe fuer Heizkoerperventile bekannt, die ein Feststellteil aufweisen, das als rohrschellenartiges Feststellteil ausgebildet ist, das unter Zuhilfenahme einer Schraube und einer Mutter um den Rohrstutzen verspannbar ist. Um eine ordnungsgemaesse Lageanordnung waehrend des Spannvorganges des Feststellteiles auf den Verbindungszangen des Verbindungsstutzens zu gewaehrleisten, weisen die zangenfoermig ausgebildeten Bauteile eine ringfoermige Aussennut auf. In diese Nut greift mit formschluessiger Verbindung die Innenflaeche des rohrschellenartigen Feststellteils ein. Der Stutzen weist in der Naehe der backenfoermigen Bauteile eine Baulaenge auf, die es ermoeglicht, die ringfoermig angeordnete Rohrschelle in einer Ruhelage, d.h. ausser Wirkverbindung mit der Ringnut, auf der Aussenseite der zangenfoermigen Bauteile anzuordnen. Befindet sich die Rohrschelle in Ruhelage, so koennen die backenfoermigen Bauteile die elastische Spreizbewegung durchfuehren, die fuer die Montage des Thermostatkopfes auf dem rohrfoermigen Endstueck des Steuerventils des Heizkoerpers erforderlich ist. Auf dem Stutzen der bekannten Thermostatkoepfe kann der Einstelldrehgriff des Thermostatkopfes aufgeschraubt werden.

Bei den bekannten Thermostatkoepfen sind im wesentlichen zwei Nachteile festzustellen. Die Schraube sowie die Spannmutter der Rohrschelle stellen zusaetzliche Bauteile dar, die nicht nur verloren werden koennen, sondern zu einer Verteuerung der Spanneinrichtung fuehren. Ferner sind Schraube und Mutter in der Rohrschelle zu montieren und gegenseitig zu verbinden. Es besteht die Gefahr, dass aus Gruenden der Zeitersparnis durch den Heizungsmonteur die bisher uebliche Rohrschelle in ihrer Ruhelage verspannt wird. Dies fuehrt zu einer ungenauen Montage sowie zu einem fehlerhaften Einstellen der gewuenschten Heizungstemperatur.

Das Dokument DE-A-3 521 965 offenbart einen Thermostat fuer Heizkoerperventile. Derartige Thermostate sind auch als Thermostatkoerper bezeichnet.

Das dem Heizkoerperventil zugewandte Ende des Thermostatkopfes ist als Verbindungsstutzen ausgebildet, der aus elastisch radial auseinander spreizbaren Spannbacken besteht. Auf der Innenseite der Spannbacken ist eine Umfangsnut vorgesehen, deren Querschnitt der Form einer auf dem Verbindungsstutzen des Heizkoerperventils angeformten Verdickung angepasst ist. Eine Spannhuelse ist auf die Spannbacken von einer Ruhelage, in der die Huelse mit dem Spannbereich der Spannbacken ausser Eingriff ist und die Spannbacken zur Montage auf das Heizkoerperventil aufweitbar sind, in eine Spannlage axial verschiebbar, in der die Huelse in Eingriff mit dem Spannbereich, das heisst mit dem freien Ende der Spannbacken ist.

Die offenbarte Gestaltung der Spannhuelse und der Spannbacken laesst kein freies Aufweiten der Spannbacken bei der Montage des Thermostatkopfes auf das Heizkoerperventil zu. Mit diesem Thermostatkopf ist ferner eine automatische Verschiebung der Huelse von der Ruhelage in die Spannlage bei der Montage auf das Heizkoerperventil nicht durchfuehrbar.

Es ist daher Aufgabe der vorstehenden Erfindung, einen Thermostatkopf der genannten Art vorzuschlagen, mit dem die Nachteile des Standes der Technik vermieden werden koennen und der mit einem Festspannteil ausgeruestet ist, dem verlierbare Zusatzteile fehlen und der ferner ein Spannen des Thermostatkopfstutzens auf dem Ventil des Heizkoerpers nur in der fuer die Verspannung vorgesehenen Lage erlaubt.

Bei dem erfindungsgemaess ausgebildeten Thermostatkopf wird diese Aufgabe durch die Merkmale des Anspruches 1 geloest. Weitere vorteilhafte Ausgestaltungen der Erfindung sind in den Unteranspruechen 2 und 3 beschrieben.

Der mit dem erfindungsgemaessen Thermostatkopf erzielbare Vorteil besteht hauptsaechlich darin, dass das Festspannteil einstueckig herstellbar ist und keine nachtraegliche Bearbeitung erfordert.

Ein besonderer Vorteil der Erfindung ist darin zu sehen, dass das Festspannen des Thermostatkopfes von Hand erfolgen kann, d.h. ohne den Einsatz von Werkzeugen. Dies ermoeglicht es, die Installationszeit des Thermostatkopfes wesentlich zu verkuerzen.

Zwei Ausfuehrungsbeispiele der Erfindung werden nun genauer beschrieben und in den Zeichnungen dargestellt. Es zeigen:
Fig. 1 eine Seitenansicht einer ersten Ausfuehrungsform eines Thermostatkopfes mit Verbindungsende im Schnitt, vor Montage des Thermostatkopfes auf dem Koerper eines Heizkoerperventiles;
Fig. 2 eine Darstellung gemaess Fig. 1 mit dem Thermostatkopf in montierter Lage am Koerper des Heizkoerperventiles;
Fig. 3 zeigt eine weitere Ausfuehrungsform des erfindungsgemaessen Thermostatkopfes.

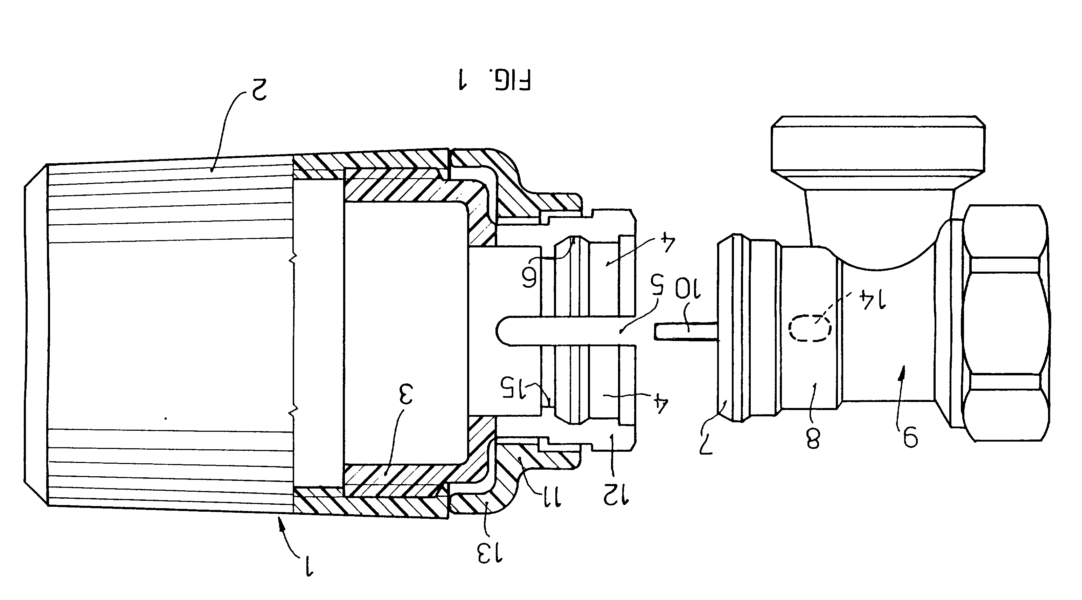

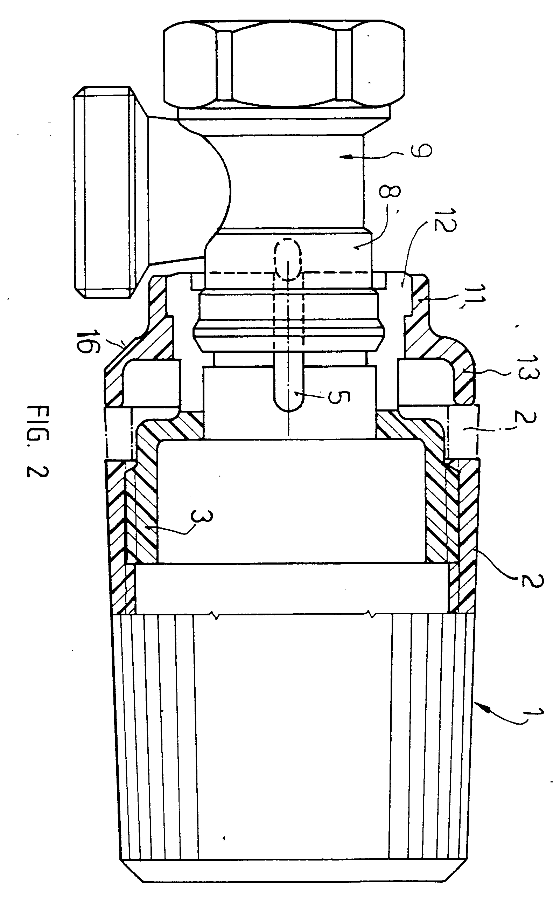

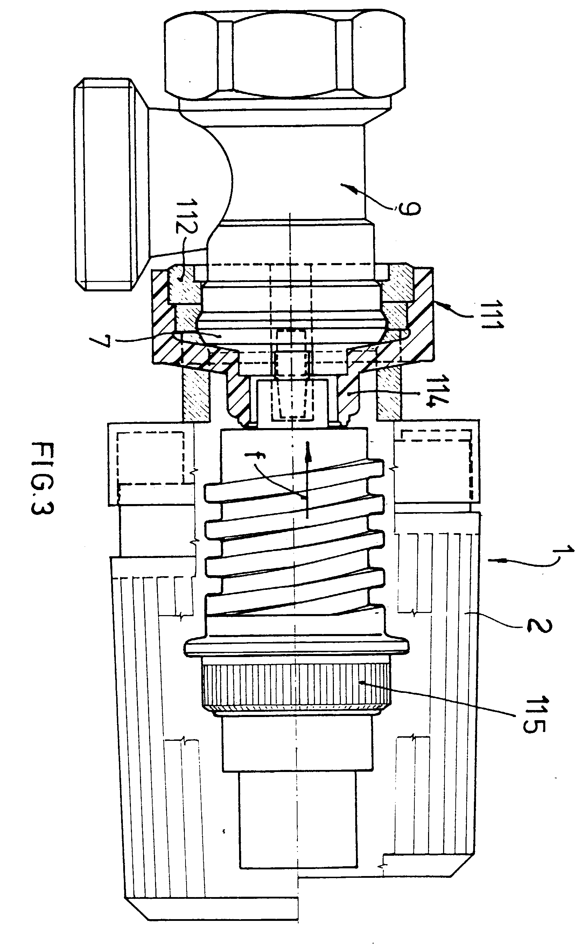

Der Thermostatkopf wird in seiner Gesamtheit mit 1 gekennzeichnet. Es besteht in an sich bekannter Weise aus einem glockenfoermigen Drehgriff 2, mit dem die Heizleistung einstellbar ist. Zu diesem Zweck ist im Inneren des Drehgriffes 2 in Fig. 1 und 2 ein nicht dargestelltes und in Fig. 3 mit 115 bezeichnetes thermostatisches Steuerelement einqebaut.

Der glockenfoermige Drehgriff 2 ist verschiebbar auf einem Anschlußstutzen 3 aufgeschraubt und kann zwischen einer Stellung, die der maximalen Ventiloeffnung (Fig. 1 ) -entspricht, und einer Verschlußstellung (in Fig. 2 mit Strichpunktlinien dargestellt) verschoben werden. Der Stutzen 3 weist ein Verbindungsende 12 auf, das Spannbacken 4 aufweist, die in bekannter Weise in Umfangsrichtung angeordnet sind und untereinander durch Axialeinschnitte 5 getrennt sind.

In den dargestellten Beispielen sind vier Spannbacken 4 vorgesehen. Die Befestigungsbacken 4 erstrecken sich in Umfangsrichtung und auf ihrer Innenflaeche weisen sie eine Umfangsnut 6 auf. In bekannter Weise ist der Querschnitt der Umfangsnut 6 an die Form einer ringfoermigen Verdickung 7 angepasst, die an einem Verbindungsstutzen 8 des Ventilkoerpers 9 des nicht dargestellten Heizkoerperventiles vorgesehen ist. Mit dem Bezugszeichen 10 ist in Fig. 1 ein Steuerstift des Heizkoerperventiles 9 dargestellt. Dieser Stift steht mit einem Thermoelement (115 in Fig. 3), das im Inneren des Thermostatkopfes 2 vorgesehen ist, in Wirkverbindung.

Erfindungsgemaess besteht die Spannhuelse, die mit den Spannbacken 4 zur festen Verbindung des Thermostatkopfes auf dem Verbindungsstutzen des Steuerventils 9 des Heizkoerpers zusammenarbeiten, aus einer Huelse 11, die in Laengsrichtung auf dem Stutzen 3 verschiebbar angeordnet ist.

In den dargestellten Beispielen weist die Innenflaeche der Huelse 11 und die Aussenflaeche der Spannbacken 4 im Spannbereich 12 stufenfoermige Ausbildung auf. Es sind natuerlich auch andere Ausfuehrungsformen fuer die zusammenzufuegenden Flaechen, die in vorteilhafter Weise mit Formschluss verbindbar sind, denkbar, z.B. kegelstumpfartig ausgebildete oder aehnliche Flaechen.

Wie der Fig. 1 zu entnehmen ist, ist zwischen der sich in Ruhelage befindlichen Huelse 11 und der Aussenflaeche der Spannbacken 4 ein gewisses Spiel vorgesehen.

Der Verbindungsstutzen 3 und die Huelse 11 sind in vorteilhafter Weise aus Kunststoff hergestellt.

In dem bevorzugten Ausfuehrungsbeispiel, das in Fig. 1u.2 dargestellt ist, weist die Huelse 11 auf der dem Drehgriff 2 zugewandten Seite glockenfoermige Erweiterung 13 auf, die einen Aussendurchmesser hat, der dem Aussendurchmesser des der Huelse 11 zugewandten freien Ende des Drehgriffes 2 entspricht. Die Laenge der glockenfoermigen Aufweitung 13 ist so gewaehlt, dass bei in Ruhelage befindlicher Huelse 11, das freie Ende der glockenfoermigen Erweiterung 13 am freien Ende des Drehgriffes 2 bei maximaler Ventiloeffnung (Fig. 1) anliegt.

Mit 14 ist ein zapfenartiger Vorsprung des Ventilkoerpers 9 gekennzeichnet, der in bekannter Weise mit einer nicht dargestellten Ausnehmung am Verbindungsstutzen 3 zusammenwirkt, um eine ordnungsgemaesse Lageanordnung der Bauteile waehrend der Montage des Thermostatkopfes 1 zu ermoeglichen.

Die Arbeitsweise des erfindungsgemaessen Thermostatkopfes ist folgende:

Die Huelse 11 ist durch einfaches Zusammendruecken der Spannbacken 4 in Radialrichtung auf das aus den Spannbacken 4 bestehende Stutzenende 12 aufsteckbar.

Wird bei der Montage der Stutzen 3 unter Aufbringung einer leichten Schubkraft in Richtung auf den Verbindungsstutzen 8 des Ventilkoerpers 9 verschoben, erfolgt ein elastisches Aufweiten der Spannbacken 4. Durch den inneren Ringwulst 15 wird ein Anschlag gebildet, der den Montagehub des Thermostatkopfes 1 begrenzt. Die Spannbacken 4 schliessen sich elastisch, wobei der Ringwulst 7 in der Ringnut 6 zu liegen kommt. Fuer die sichere Befestigung des Stutzens 3 auf dem Ventilkoerper 9 ist es nun erforderlich, die Huelse 11 axial aus der Ruhelage (Fig. 1) in die Spannlage (Fig. 2) zu verschieben. Mit einer glockenfoermig ausgebildeten Huelse 11 erfolgt diese Verschiebung automatisch durch eine Drehbewegung des Drehgriffes 2 aus der Stellung maximaler Ventiloeffnung (Fig. 1) in die Stellung des Ventilabschlusses (Strichpunktlinien in Fig. 2).

Um eine einwandfreie Montage der Huelse 11 auch bei Ventilkoerpern 9 mit groesseren Abmessungen zu ermoeglichen, z. B. bei groesseren Vierwegeventilen, kann die Huelse 11 eine oder mehrere Anfasungen in Umfangsrichtung aufweisen, wie dies z.B. mit dem Bezugszeichen 16 in Fig. 2 angedeutet ist.

Der Fig. 3 kann eine weitere Ausfuehrungsform des erfindungsgemaess ausgebildeten Thermostatkopfes 1 entnommen werden. Waehrend in Fig. 2 die Spannhuelse 11 durch das freie Ende des Drehgriffes 2 verschoben wird, ist nach Fig. 3 eine elastische Spannhuelse 111 vorgesehen, die einen im Durchmesser verkleinerten Bund 114 aufweist, der in das Innere des Thermostatkopfes 1 ragt.

Auf den Bund 114 wirkt bei einer Drehbewegung des Drehgriffes 2 ein zylinderfoermiger Einsatz (Thermoelement 115 ein, der ebenfalls bei einer Drehbewegung des Drehgriffes 2 eine Verschiebebewegung in Richtung des Pfeiles (f) durchfuehrt. Die Ausfuehrungsform gemaess Fig. 3 hat den Vorteil, dass die Spannhuelse 111 sehr kleine Abmessungen aufweist und am Umfang des Thermostatkopfes 1 keine ringfoermige Oeffnung verbleibt, in der sich z. B. Schmutz ablagern koennte.

Die Funktionsweise der Spannhuelse 111 entspricht der Arbeitsweise der Spannhuelse 11 gemaess Fig. 1 und 2, d.h. auch die Spannhuelse 111 kann aus einer Ruhelage aufgrund einer Laengsverschiebung in Richtung des Pfeiles f ueber eine spannzangenartige Verlaengerung 112 des Thermostatkopfes geschoben werden, um eine formschluessige Verbindung zwischen der zangenartigen Verlaengerung 112 des Thermostatkopfes 1 und dem vom Ventil 9 abstehenden Verbindungsstutzen 8 zu ermoeglichen.

## Patentansprüche

1. Thermostatkopf (1) fuer das Steuerventil (9) eines Heizkoerpers einer Heizungsanlage, bestehend aus einem einstellbaren gehaeuseartigen Drehgriff (2) und einem am Heizkoerperventil (9) fest anbringbaren Verbindungsstutzen (3), einem im Thermostatkopf (1) aufgenommenen und mit dem Drehgriff (2) wirkverbundenen Thermostat (115), wobei das Verbindungsende (12) des Verbindungsstutzens (3) als Spannbereich ausgefuehrt ist, der von elastisch radial auseinander spreizbaren Spannbacken (4) gebildet ist, die auf ihrer Innenseite eine Umfangsnut (6) aufweisen, deren Querschnitt der Form einer auf dem Verbindungsstutzen (8) des Heizkoerperventils (9) vorgesehenen Verdickung (7) angepasst ist, sowie einer auf den Verbindungsstutzen (3) des Thermostatkopfes (1) angebrachten glockenfoermigen Huelse (11), die von einer Ruhelage, in der die Huelse (11) mit dem Spannbereich (12) der Spannbacken (4) ausser Eingriff ist, in eine Festlage axial verschiebbar ist, in der die Huelse den Spannbereich (12) der Spannbacken (4) umgibt, **dadurch gekennzeichnet,** dass der Drehgriff (2) auf dem Verbindungsstutzen (3) des Thermostatkopfes (1) aufschraubbar aufgenommen ist, dass die Innenflaeche der Huelse (11) und die Aussenflaeche der Spannbacken (4) im Spannbereich (12) stufenfoermige Form aufweisen, und dass bei sich in der Ruhelage befindlicher Huelse (11) das dem Drehgriff (2) zugewandte Ende der Huelse (11) am Ende des Drehgriffes (2) bzw. am Thermoelement bei maxialer Ventiloeffnung anliegt, so dass beim Drehen des Drehgriffes (2) in die Schließstellung des Thermostatkopfes (1) die Huelse (11) auf den Spannbereich (12) der Spannbacken verschoben wird.

2. Thermostatkopf (1) nach Anspruch 1, **dadurch gekennzeichnet,** dass das dem Drehgriff (2) zugewandte Ende der Huelse (11) eine glockenfoermige Aufweitung (13) aufweist, deren Aussendurchmesser dem Aussendurchmesser des der Huelse (11) zugewandten Drehgriffendes entspricht, und dass bei sich in Ruhelage befindlicher Huelse (11) die Aufweitung (13) am Drehgriff liegt.

3. Thermostatkopf (1) nach Anspruch 1, **dadurch gekennzeichnet,** dass das dem Drehgriff (2) zugewandte Ende der Hülse (111) einen Bund (114) mit kleinerem Durchmesser als der Innendurchmesser der Spannbacken (4) aufweist, und dass bei sich in Ruhelage befindlicher Huelse (111) der Bund (114) an einem Thermostatkopfteil liegt, das mit dem Thermostat (115) wirkverbunden und mit dem Drehgriff (2) axial verschiebbar ist.

## Claims

1. Thermostat head (1) for the control valve (9) of a radiator of a heating system, comprising an adjustable housing-like knob (2) and a connecting piece (3) which can be firmly attached to the radiator valve (9), a thermostat (115), which is accommodated in the thermostat head (1) and is effectively connected to the knob (2), the connecting end (12) of the connecting piece (3) being designed as a clamping region which is formed by clamping jaws (4) which can be flexibly spread apart radially and have on their inner side a circumferential groove (6), the cross-section of which is adapted to the shape of a thickening (7) provided on the connecting piece (8) of the radiator valve (9), and also a bell-shaped sleeve (11), which is fitted onto the connecting piece (3) of the thermostat head (1) and can be displaced axially from a position of rest, in which the sleeve (11) is out of engagement with the clamping region (12) of the clamping jaws (4), into a fixed position, in which the sleeve surrounds the clamping region (12) of the clamping jaws (4), characterized in that the knob (2) is accommodated on the connecting piece (3) of the thermostat head (1) in such a way that it can be screwed on, in that the inner surface of the sleeve (11) and the outer surface of the clamping jaws (4) have in the clamping region (12) a step-shaped form, and in that, with the sleeve (11) in the position of rest, the end of the sleeve (11) facing the knob (2) bears against the end of the knob (2), or against the thermocouple when there is maximum valve opening, so that when the knob (2) is turned into the closed position of the thermostat head (1) the sleeve (11) is displaced onto the clamping region (12) of the clamping jaws.

2. Thermostat head (1) according to Claim 1, characterized in that the end of the sleeve (11) facing the knob (2) has a bell-shaped widening (13), the outside diameter of which corresponds to the outside diameter of the end of the knob facing the sleeve (11), and in that, with the sleeve (11) in the position of rest, the widening (13) lies against the knob.

3. Thermostat head (1) according to Claim 1, characterized in that the end of the sleeve (111) facing the knob (2) has a collar (114) of smaller diameter than the inside diameter of the clamping jaws (4), and in that, with the sleeve (111) in the position of rest, the collar (114) lies against a thermostat head part which is effectively connected to the thermostat (115) and is axially displaceable with the knob (2).

## Revendications

1. Tête thermostatique (1) pour la vanne de commande (9) d'un radiateur d'une installation de chauffage, constituée d'une poignée tournante réglable (2) en forme de boîtier et d'un manchon de raccordement (3) monté fixement sur la vanne de radiateur (9), d'un thermostat (15) reçu dans une tête thermostatique (1) et en liaison active avec la poignée tournante (2), l'extrémité de liaison (12) du manchon de raccordement (3) étant réalisée sous forme de zone de serrage qui est constituée par des mâchoires de serrage (4) aptes à être écartées radialement d'une manière élastique et qui présentent sur leur côté intérieur une rainure périphérique (6) dont la section transversale est adaptée à la forme d'un épaississement (7) prévu sur le manchon de raccordement (8) de la vanne de radiateur (9), et d'une douille en forme de cloche (11) montée sur le manchon de raccordement (3) de la tête thermostatique (1) qui est déplaçable axialement d'une position de repos où la douille (11) est hors prise avec la zone de serrage (12) des mâchoires de serrage (4), en une position fixe où la douille entoure la zone de serrage (12) des mâchoires de serrage (4), caractérisée en ce que la poignée tournante (2) est reçue par vissage sur le manchon de raccordement (3) de la tête thermostatique (1), en ce que la face intérieure de la douille (11) et la face extérieure des mâchoires de serrage (4) présentent dans la zone de serrage (12) une forme à gradin et en ce que, lorsque la douille (11) se trouve en position de repos, l'extrémité de la douille (11) orientée vers la poignée tournante (2) s'applique à l'extrémité de la poignée tournante (2) et, respectivement à l'élément thermique, la vanne étant à son état d'ouverture maximal, de telle sorte que lors de la rotation de la poignée tournante (2) dans la position de fermeture de la tête thermostatique (1), la douille (11) est poussée sur la zone de serrage (12) des mâchoires de serrage.

2. Tête thermostatique (1) selon la revendication 1, caractérisée en ce que l'extrémité de la douille (11) orientée vers la poignée tournante (2) présente un élargissement en forme de cloche (13) dont le diamètre extérieur correspond au diamètre extérieur de l'extrémité de la poignée tournante orientée vers la douille (11) et en ce que, lorsque la douille (11) se trouve en position de repos, l'élargissement (13) se trouve à la poignée tournante.

3. Tête thermostatique (1) selon la revendication 1, caractérisée en ce que l'extrémité de la douille (111) orientée vers la poignée tournante (2) présente un collet (114) d'un diamètre qui est plus petit que le diamètre intérieur des mâchoires de serrage (4), et en ce que, lorsque la douille (111) se trouve en position de repos, le collet (104) se situe à une partie de la tête thermostatique qui est en liaison active avec le thermostat (115) et qui est déplaçable axialement avec la poignée tournante (2).
